# EUROPÄISCHE PATENTANMELDUNG

(11) **EP 3 290 333 A1**
(43) Veröffentlichungstag der Anmeldung: **07.03.2018**
(21) Anmeldenummer: 16187248.6
(22) Anmeldetag: 05.09.2016
(51) Int. Cl.: B64C 21/02, B64C 21/08

(54) **FLUIDAKTUATOR MIT STRAHLVEKTORKONTROLLE UND STRÖMUNGSKÖRPER**

(71) Anmelder: Airbus Defence and Space GmbH, 82024 Taufkirchen (DE)
(72) Erfinder: Meyer, Michael, 81829 München (DE); Bauer, Matthias, 12435 Berlin (DE)
(74) Vertreter: Isarpatent

(57) **Zusammenfassung**

Die vorliegende Erfindung beschreibt einen Fluidaktuator (1) zur Beeinflussung einer Strömung eines Umgebungsfluids entlang einer Strömungsoberfläche (100a), mit einem Ausblaskanal (10) zur Verbindung mit einer Druckfluidquelle (240) und mit einer in der Strömungsoberfläche (100a) ausgebildeten Oberflächenausblasöffnung (110) und einem Ansaugkanal (20) zum Anschluss an eine in der Strömungsoberfläche (100a) ausgebildete Oberflächenansaugöffnung (120), wobei der Ansaugkanal (20) an einer Entrainmentöffnung (22A) in den Ausblaskanal (10) einmündet. Ferner ist ein Strömungskörper (100) mit einem Fluidaktuator (1) beschrieben.

## Beschreibung

Die vorliegende Erfindung betrifft einen Fluidaktuator und einen Strömungskörper, insbesondere für ein Luftfahrzeug.

Obwohl in vielfältigen Anwendungen umströmter Oberflächen verwendbar, werden die vorliegende Erfindung sowie die ihr zugrunde liegende Problematik in Bezug auf umströmte Oberflächen von Luftfahrzeugen näher erläutert.

Zur Ablösekontrolle von Grenzschichten an umströmten Körpern, insbesondere an Tragflächen von Luftfahrzeugen, wird häufig Druckluft in gepulster Weise an der Oberfläche des umströmten Körpers ausgeblasen. Dies dient der Energetisierung der Grenzschicht, wodurch eine Ablösung der Grenzschicht verhindert und eine günstige Druckverteilung entlang der Oberfläche mit verbessertem Auftrieb und verringertem Strömungswiderstand des Strömungskörpers erreicht wird..

Aus der EP 2 650 213 A1 ist ein Strömungskörper mit einem Fluidaktuator bekannt. Der Fluidaktuator weist einen Ausblaskanal auf, welcher an eine in einer Strömungsoberfläche des Strömungskörpers ausgebildete Öffnung sowie an eine Druckluftquelle angeschlossen ist. Mittels einer Kontrolldruck-Variationseinrichtung ist ein von der Druckluftquelle bereitgestelltes Druckfluid in gepulster Weise durch die Öffnungen an der Strömungsoberfläche ausbringbar.

Die Ausblaskanäle derartiger Fluidaktuatoren müssen üblicherweise innerhalb des Querschnitts des Strömungskörpers verlegt werden. Dabei ist der zur Verfügung stehende Bauraum begrenzt. Die durch den Verlauf des Ausblaskanals sowie durch die Öffnungen der Strömungsoberfläche definierte Strömungsrichtung des ausgeblasenen Druckfluids ist damit oft durch konstruktive Randbedingungen festgelegt. Insbesondere muss oftmals ein Kompromiss zwischen fluidmechanischen und konstruktiven Anforderungen gefunden werden.

Es ist eine der Aufgaben der vorliegenden Erfindung einen Fluidaktuator bereitzustellen, mit dem die fluidmechanischen Eigenschaften eines Strömungskörpers verbessert werden und der auf einfache Weise in den Strömungskörper integrierbar ist.

Eine weitere Aufgabe der vorliegenden Erfindung besteht darin, einen fluidmechanisch verbesserten Strömungskörper bereitzustellen.

Diese Aufgaben werden durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Fluidaktuator zur Beeinflussung einer Strömung eines Umgebungsfluids entlang einer Strömungsoberfläche vorgesehen. Der Fluidaktuator weist einen Ausblaskanal mit einer an dessen ersten Ende vorgesehenen Einlassöffnung zur Verbindung mit einer Druckfluidquelle und einer an dessen zweiten Ende vorgesehenen Ausblasöffnung zum Anschluss an eine in der Strömungsoberfläche ausgebildete Oberflächenausblasöffnung auf. Weiterhin weist der Fluidaktuator einen Ansaugkanal mit einer an dessen ersten Ende vorgesehenen Ansaugöffnung zum Anschluss an eine in der Strömungsoberfläche ausgebildete Oberflächenansaugöffnung, welche in einer Strömungsrichtung des Umgebungsfluids beabstandet zu der Oberflächenausblasöffnung angeordnet ist, auf. Der Ansaugkanal mündet an dessen zweiten Ende an einer zwischen dem ersten Ende des Ausblaskanals und dem zweiten Ende des Ausblaskanals vorgesehenen Entrainmentöffnung in den Ausblaskanal ein.

Erfindungsgemäß wird demnach ein Fluidaktuator mit einem Ausblaskanal zum Ausblasen eines Druckfluids an eine Strömungsoberfläche und einem Ansaugkanal zum Ansaugen von Fluid an der Strömungsoberfläche angegeben. Insbesondere mündet der Ansaugkanal an einer Entrainmentöffnung oder Rückführungsöffnung in den Ausblaskanal ein und steht damit in fluidleitender Verbindung mit dem Ausblaskanal. Durch diesen Aufbau bewirkt ein durch den Ausblaskanal strömender Massenstrom des Druckfluids eine Ansaugung von sich in dem Ansaugkanal befindlichem Fluid in den Ausblaskanal. Dies wird als "Entrainment" bezeichnet. Das Druckfluid kann somit durch den Ausblaskanal transportiert und zur Beeinflussung der Strömung durch eine Oberflächenausblasöffnung der Strömungsoberfläche ausgeblasen werden. Dort tritt der Massenstrom als Strahl unter einem Strahlaustrittswinkel relativ zu der Strömungsoberfläche aus. Durch den beschriebenen Aufbau des Fluidaktuators wird durch Ansaugung von Fluid aus dem Ansaugkanal in den Ausblaskanal infolge der Strömung des Druckfluids durch den Ansaugkanal an einer Ansaugöffnung des Ansaugkanals, welche an eine Oberflächenansaugöffnung der Strömungsoberfläche anschließbar ist, ein Ansaugen von Fluid, also die Erzeugung eines Unterdrucks an der Ansaugöffnung des Ansaugkanals bzw. der Oberflächenansaugöffnung bewirkt. Durch den erzeugten Unterdruck wird der Strahlaustrittswinkel des austretenden Strahls des Druckfluids verändert. Insbesondere wird der Strahl des Druckfluids in Richtung der Oberflächenansaugöffnung abgelenkt. Somit wird der tatsächliche Strahlaustrittswinkel des Druckfluids durch die Rückführung des Ansaugkanals in den Ausblaskanal des Fluidaktuators von dem durch den Verlauf des Ausblaskanals bzw. der Oberflächenausblasöffnung vorgegebenen geometrischen Austrittswinkel entkoppelt. Damit können der Ausblaskanal und der Ansaugkanal des Fluidaktuators vorteilhaft in platzssparender Weise innerhalb eines Strömungskörpers verlegt werden. Durch den Fluidaktuator wird folglich eine Strahlvektorkontrolle, also eine gezielte, variable Einstellung der Strömungsrichtung des Druckfluidstrahls, realisiert. Gleichzeitig wird durch das Ansaugen von Fluid an der Strömungsoberfläche eine Möglichkeit zur gezielten, an die fluidmechanischen Randbedingungen angepassten Beeinflussung des Strahlaustrittswinkels des an der Strömungsoberfläche ausgeblasenen Druckfluids geschaffen. Da die Ansaugung aufgrund der Einmündung des Ansaugkanals in den Ausblaskanal durch Entrainment bewirkt wird, sind keinerlei zusätzliche Ansaugkomponenten notwendig. Dies führt zu einem kompakten und platzsparenden Aufbau sowie zu einem geringen Gewicht des Fluidaktuators. Auch sind durch den Aufbau des Fluidaktuators keine bewegbaren Teile zur Erzeugung des Unterdrucks an der Strömungsoberfläche notwendig. Dies ist ein bedeutender Vorteil hinsichtlich Ausfallsicherheit und Wartung des Fluidaktuators.

Gemäß einer vorteilhaften Weiterbildung des Fluidaktuators ist die Entrainmentöffnung der Ausblasöffnung zugewandt orientiert. Der Ansaugkanal mündet demnach unter einem Winkel von kleiner oder gleich 90 Grad relativ zu der Längserstreckung des Ausblaskanals in diesen ein. Besonders bevorzugt ist hierbei eine nahezu tangentiale Einmündung. Dadurch werden Strömungsverluste im Bereich der Entrainmentöffnung verringert und die Effizienz des Entrainments erhöht.

Weiterhin kann vorgesehen sein, dass der Ausblaskanal zwischen der Entrainmentöffnung und der Ausblasöffnung einen Querschnitt aufweist, der größer ist als ein Querschnitt des Ausblaskanals zwischen der Einlassöffnung und der Entrainmentöffnung. Gemäß dieser Weiterbildung wird die Querschnittsfläche des Ansaugkanals in Bezug auf eine von der Zufuhröffnung zu der Ausblasöffnung des Ansaugkanals gerichtete Strömungsrichtung stromabwärts der Entrainmentöffnung vergrößert. Dadurch kann die Strömungsgeschwindigkeit des infolge des Entrainments aus dem Ansaugkanal vergrößerte Massenstroms in dem Ansaugkanal kontrolliert und dadurch möglicherweise auftretende Strömungsverluste verringert werden.

Gemäß einer besonders bevorzugten Ausführungsform des Fluidaktuators bildet ein Zentralkörper jeweils eine sich zwischen der Entrainmentöffnung und der Ausblasöffnung des Ausblaskanals erstreckende Wandung des Ausblaskanals sowie eine Wandung des Ansaugkanals aus. Insbesondere ist der Zentralkörper zwischen dem Ausblaskanal und dem Ansaugkanal angeordnet und begrenzt mit entgegengesetzten Oberflächen jeweils den jeweiligen Kanal. Damit wird ein besonders kompakter Aufbau des Fluidaktuators erreicht. Weiterhin besteht große Freiheit bei der Gestaltung der die Kanäle begrenzenden Oberflächen des Zentralkörpers, wodurch eine hinsichtlich Strömungsverlusten günstige Erstreckung der Kanäle auf einfache und platzsparende Weise realisierbar ist.

Nach einer weiteren Ausführungsform ist vorgesehen, dass der Fluidaktuator zusätzlich eine Zufuhrvariationseinrichtung aufweist, mittels derer eine Zufuhr eines durch die Druckfluidquelle bereitgestellten Druckfluids in den Ausblaskanal regelbar ist, wobei die Einlassöffnung des Ausblaskanals an einen Ausgang der Variationseinrichtung angeschlossen und ein Eingang der Variationseinrichtung an die Druckfluidquelle anschließbar ist. Die Zufuhrvariationseinrichtung bildet insbesondere eine Regelungs- oder Steuerungseinrichtung für den dem Ausblaskanal zuzuführenden Massenstrom des Druckfluids. Diese bietet vorteilhaft die Möglichkeit, je nach fluidmechanischer Anforderung der Strömung eines Umgebungsfluids entlang der Strömungsoberfläche verschiedene Massenströme auszublasen.

Besonders bevorzugt ist die Zufuhrvariationseinrichtung derart ausgebildet, dass die Zufuhr des Druckfluids in den Ausblaskanal periodisch unterbrechbar ist. Damit kann ein gepulstes Ausblasen von Druckfluid erfolgen, wodurch auf besonders effiziente Weise Wirbelstrukturen in die Strömung des Umgebungsfluids zur Vermeidung der Strömungsablösung eingebracht werden können.

Gemäß einem zweiten Aspekt der vorliegenden Erfindung ist ein Strömungskörper mit einer Strömungsoberfläche zur Überströmung mit einem Umgebungsfluid in einer Strömungsrichtung vorgesehen. Der Strömungskörper weist einen Fluidaktuator mit einem Ausblaskanal mit einer an dessen ersten Ende vorgesehenen Einlassöffnung zur Verbindung mit einer Druckfluidquelle und einer an dessen zweiten Ende vorgesehenen Ausblasöffnung, welche an eine in der Strömungsoberfläche ausgebildete Oberflächenausblasöffnung angeschlossen ist, und einen Ansaugkanal mit einer an dessen ersten Ende vorgesehenen Ansaugöffnung auf, welche an eine in der Strömungsoberfläche ausgebildete, in einer Strömungsrichtung des Umgebungsfluids beabstandet zu der Oberflächenausblasöffnung angeordnete Oberflächenansaugöffnung angeschlossen ist, wobei der Ansaugkanal an dessen zweiten Ende an einer zwischen dem ersten Ende des Ausblaskanals und dem zweiten Ende des Ausblaskanals vorgesehenen Entrainmentöffnung in den Ausblaskanal einmündet.

Demnach wird ein Strömungskörper angegeben, welcher einen Fluidaktuator aufweist. Der Fluidaktuator kann insbesondere gemäß einer der voranstehend beschriebenen Ausführungsformen ausgebildet sein.

Durch die oben beschriebene Möglichkeit der Entkopplung des geometrischen Austrittswinkels des Ausblaskanals bzw. der Oberflächenausblasöffnung des Strömungskörpers und des tatsächlichen Strahlaustrittswinkels des durch die Oberflächenausblasöffnung ausblasbaren Druckfluids kann der Fluidaktuator in besonders günstiger Weise in den Strömungskörper integriert werden. Insbesondere können damit mechanische Festigkeitsanforderungen und fluidmechanische Anforderungen des Strömungskörpers gleichzeitig und unabhängig voneinander berücksichtig werden. Insbesondere durch die Einstellbarkeit des Strahlaustrittswinkels durch den Anschluss des Ansaugkanals des Fluidaktuators an die Oberflächenansaugöffnung des Strömungskörpers werden die fluidmechanischen Eigenschaften des Strömungskörpers verbessert. Gemäß einer vorteilhaften Weiterbildung ist die Oberflächenansaugöffnung in Bezug auf die Strömungsrichtung des Umgebungsfluids stromabwärts der Oberflächenausblasöffnung angeordnet. Auf diese Weise wird durch die Ablenkung des aus der Oberflächenausblasöffnung austretenden Strahls des Druckfluids in Richtung der Oberflächenansaugöffnung der Strahlaustrittswinkel des Druckfluidstrahls in Bezug auf die Strömungsrichtung verringert. Dies erlaubt vorteilhaft die Integration des Fluidaktuators derart, dass der Ausblaskanal nahezu senkrecht oder generell quer zu der Strömungsoberfläche verläuft, was hinsichtlich einer mechanisch stabilen Integration des Fluidaktuators in den Strömungskörper günstig ist.

Gemäß einer hierzu alternativen Ausführungsform des Strömungskörpers ist die Oberflächenansaugöffnung in Bezug auf die Strömungsrichtung stromaufwärts der Oberflächenausblasöffnung angeordnet. Damit kann der aus der Oberflächenausblasöffnung ausblasbare Druckfluidstrahl relativ zur Strömungsrichtung des Umgebungsfluids aufgesteilt werden. Dies erlaubt vorteilhaft die Integration des Fluidaktuators derart, dass der Ausblaskanal nahezu parallel zu oder generell entlang der Strömungsoberfläche verläuft. Dies ist insbesondere hinsichtlich der Integration des Fluidaktuators in sehr dünne Strömungskörper mit geringem Platzangebot günstig.

Nach einer weiteren vorteilhaften Weiterbildung des Strömungskörpers ist vorgesehen, dass eine Mittelachse des Ausblaskanals, welche sich im Bereich der Ausblasöffnung des Ausblaskanals ergibt, mit einer Tangente, welche sich an der Strömungsoberfläche an der Stelle der Oberflächenausblasöffnung ergibt, einen spitzen Winkel einschließt. Ein spitzer Winkel ermöglicht vorteilhaft eine effiziente Beeinflussung der Umgebungsströmung.

Bevorzugt beträgt der spitze Winkel zwischen der Mittelachse des Ausblaskanals und der Tangente an die Strömungsoberfläche zwischen 85 Grad und 5 Grad. Innerhalb diese Bereichs können die Oberflächenausblasöffnungen mit geringem Herstellungsaufwand in der Strömungsoberfläche ausgebildet werden. Vorzugsweise liegt der spitze Winkel zwischen 60 Grad und 15 Grad. In diesem Winkelbereich kann die Strömung des Umgebungsfluids in besonders effizienter Weise beeinflusst werden.

Gemäß einem dritten Aspekt der Erfindung ist eine Tragfläche für ein Luftfahrzeug vorgesehen, welche zumindest einen Strömungskörper nach einer der voranstehend beschriebenen Ausführungsformen aufweist, wobei die Einlassöffnung des Ausblaskanals des Fluidaktuators mit einer Druckfluidquelle verbunden ist. Bei der Verwendung des Strömungskörpers als Tragflächenkomponente einer Tragfläche eines Luftfahrzeugs sind insbesondere dessen aufgrund des Fluidaktuators fluidmechanisch günstigen Eigenschaften sowie dessen geringes Gewicht infolge der einfachen Gestaltung des Fluidaktuators vorteilhaft. Insbesondere kann der Strömungsköper aufgrund der durch den Fluidaktuator geschaffenen konstruktiven Gestaltungsfreiheit auch mit besonders großer mechanischer Stabilität ausgebildet werden.

Besonders vorteilhaft bildet hierbei zumindest ein Strömungskörper eine der Tragflächenkomponenten der Gruppe bestehend aus Vorderkantenklappe, Hinterkantenklappe, Flügelhauptkörper, Höhenflosse und Höhenruder. Aufgrund Gestaltung des Fluidaktuators besteht großer konstruktiver Spielraum bei dessen Integration in den Strömungskörper, wie oben gezeigt wurde. Dies bietet den Vorteil, dass die Strömung um verschiedenste Tragflächenkomponenten eines Luftfahrzeugs individuell und in effizienter Weise beinflussbar sind. Insbesondere wird durch den Fluidaktuator die Möglichkeit geschaffen auch in relativ enge Tragflächenbereiche bzw. in solche mit geringer Querschnittsdicke, wie z.B. Tragflächenhinterkanten, die Strömung zu beeinflussen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine schematische Ansicht eines Strömungskörpers gemäß einem bevorzugten Ausführungsbeispiel der vorliegenden Erfindung;
- Fig. 2: eine schematische Ansicht eines Fluidaktuators gemäß einem bevorzugten Ausführungsbeispiel der vorliegenden Erfindung als Detailansicht des durch den Buchstaben Z gekennzeichneten Bereichs des in der Fig. 1 gezeigten Strömungskörpers;
- Fig. 3: eine schematische Darstellung der Strömungsverhältnisse beim Betrieb des in Fig. 2 gezeigten Fluidaktuators bzw. Strömungskörpers;
- Fig. 4: eine schematische Ansicht eines Fluidaktuators gemäß einem weiteren Ausführungsbeispiel der vorliegenden Erfindung als Detailansicht eines Strömungskörpers gemäß einem weiteren Ausführungsbeispiel der vorliegenden Erfindung;
- Fig. 5: eine schematische Darstellung der Strömungsverhältnisse beim Betrieb des in Fig. 4 gezeigten Fluidaktuators bzw. Strömungskörpers; und
- Fig. 6: eine schematische Ansicht eines Luftfahrzeugs mit einer Tragfläche gemäß einem bevorzugten Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

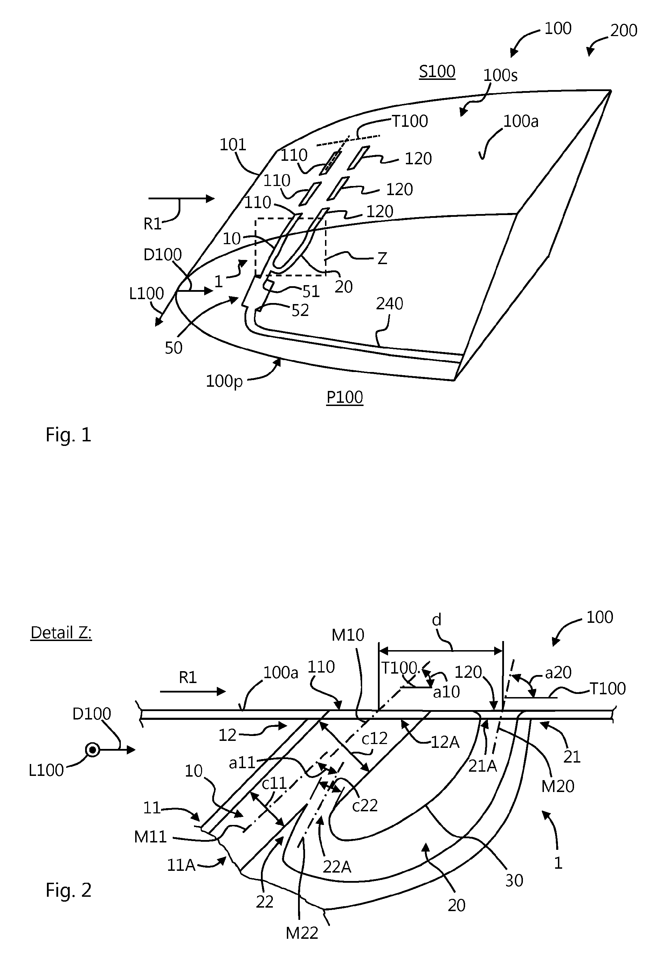

Fig. 1 zeigt beispielhaft und schematisch einen Strömungskörper 100, der einen Fluidaktuator 1 aufweist. Der Strömungskörper 100 weist eine Strömungsoberfläche 100a auf, welche zur Überströmung mit einem Umgebungsfluid vorgesehen ist. Fig. 1 zeigt beispielhaft eine Gestaltung des Strömungskörpers 100 als Tragflächenkomponente einer Tragfläche 200 eines Luftfahrzeugs 250. Wie in Fig. 1 gezeigt, kann der Strömungskörper 100 insbesondere eine sich in einer Strömungskörper-Längsrichtung L100 erstreckende Vorderkante 101 aufweisen, welche in Bezug auf eine Strömungsrichtung R1 des Umgebungsfluids ein vorderes Ende des Strömungskörpers 100 bildet. Die Strömungsoberfläche 100a kann insbesondere einen eine Saugseite S100 des Strömungskörpers 100 definierenden ersten Oberflächenbereich 100s und einen eine Druckseite P100 des Strömungskörpers 100 definierenden zweiten Oberflächenbereich 100p aufweisen.

Der Strömungskörper 100 weist weiterhin zumindest eine in der Strömungsoberfläche 100a ausgebildete Oberflächenausblasöffnung 110 auf. Insbesondere können mehrere Oberflächenausblasöffnungen 110 entlang der Strömungskörper-Längsrichtung L100 hintereinander angeordnet sein. Bei dem in Fig. 1 beispielhaft dargestellten Strömungskörper 100 sind die Oberflächenausblasöffnungen 110 in dem saugseitigen, ersten Oberflächenbereich 100s ausgebildet. Selbstverständlich können die Oberflächenausblasöffnungen 110 alternativ oder zusätzlich hierzu auch in dem druckseitigen, zweiten Oberflächenbereich 100p ausgebildet sein.

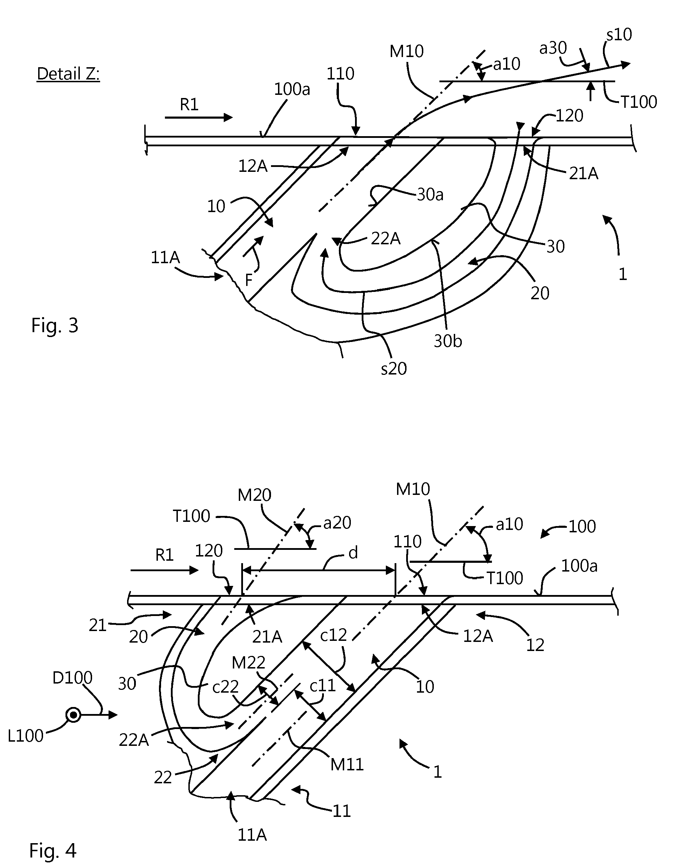

Zusätzlich zu den Oberflächenausblasöffnungen 110 weist der Strömungskörper 100 zumindest eine Oberflächenansaugöffnung 120 auf. Insbesondere können mehrere Oberflächenansaugöffnung 120 entlang der Strömungskörper-Längsrichtung L100 hintereinander angeordnet sein. Die Oberflächenansaugöffnungen 120 sind in Bezug auf eine sich quer zu der Strömungskörper-Längsrichtung L100 erstreckende Strömungskörper-Tiefenrichtung D100 beabstandet zueinander angeordnet. In Fig. 1 sind die Oberflächenansaugöffnungen 120 in Bezug auf die Strömungsrichtung R1 des Umgebungsfluids stromabwärts bzw. in Bezug auf die Strömungskörper-Tiefenrichtung D100 hinter den Oberflächenausblasöffnungen 110 angeordnet. Die Oberflächenansaugöffnungen 120 können jedoch auch zwischen der Vorderkante 101 und den Oberflächenausblasöffnungen 110, also in Bezug auf die Strömungsrichtung R1 des Umgebungsfluids stromaufwärts bzw. in Bezug auf die Strömungskörper-Tiefenrichtung D100 vor den Oberflächenausblasöffnungen 110 angeordnet sein, wie dies beispielhaft in Fig. 4 dargestellt ist.

In Fig. 1 sind die Oberflächenausblasöffnungen 110 und die Oberflächenansaugöffnungen 120 jeweils beispielhaft als längliche, sich in der Strömungskörper-Längsrichtung erstreckende Schlitze dargestellt. Diese weisen vorzugsweise eine rechteckförmige Gestalt auf.

Wie in Fig. 1 schematisch dargestellt ist, weist der Fluidaktuator 1 einen Ausblaskanal 10 und einen Ansaugkanal 20 auf. Weiterhin kann der Fluidaktuator 1 optional eine Zufuhrvariationseinrichtung 50 aufweisen. Der Fluidaktuator 100 ist an eine in Fig. 1 lediglich schematisch illustrierte Druckfluidquelle 240 anschließbar. In dem in Fig. 1 gezeigten, in den Strömungskörper 100 eingebauten Zustand des Fluidaktuators 1 ist der Ausblaskanal 10 an die Oberflächenausblasöffnung 110 und der Ansaugkanal 20 an die Oberflächenansaugöffnung 120 anschlossen.

Die Fig. 2 und 4 zeigen jeweils eine vergrößerte Detailansicht eines Fluidaktuators 1. Der Fluidaktuator 1 ist zur Beeinflussung der Strömung des Umgebungsfluids entlang der Strömungsoberfläche 100a des Strömungskörpers 100 vorgesehen. Die Beeinflussung der Strömung erfolgt dabei insbesondere durch Ausblasen eines Druckfluids aus der Oberflächenausblasöffnung 110, wodurch Wirbel in einen oberflächennahen Grenzschichtbereich der Strömung eingebracht werden. Diese sorgen für eine Durchmischung des Grenzschichtbereichs und eines energiereichen Außenbereichs der Strömung. Dadurch wird dem Grenzschichtbereich Energie zugeführt und somit eine Ablösung der Strömung von der Strömungsoberfläche 100a verhindert.

Wie in den Fig. 2 und 4 gezeigt ist, weist der Fluidaktuator 1 einen Ausblaskanal 10 mit einer an dessen ersten Ende 11 vorgesehenen Einlassöffnung 11A und einer an dessen zweiten Ende 12 vorgesehenen Ausblasöffnung 12A auf. Die Einlassöffnung 11A ist zur Verbindung mit der Druckfluidquelle 240 vorgesehen. Die Ausblasöffnung 12A ist, wie in den Fig. 2 und 4 gezeigt, im in den Strömungskörper 100 eingebauten Zustand des Fluidaktuators 1 an die Oberflächenausblasöffnung 110 angeschlossen. In den Fig. 1, 2 und 4 ist der Ausblaskanal 10 als ein sich im Wesentlichen gerade erstreckender Kanal dargestellt, wobei dieser auch einen gekrümmten Verlauf aufweisen kann. Im Bereich des Anschlusses des Ausblaskanals 10 an die Oberflächenausblasöffnung 110 schließt eine Mittelachse M10 des Ausblaskanals 10, welche sich im Bereich der Ausblasöffnung 12A des Ausblaskanals 10 ergibt, mit einer Tangente T100, welche sich an der Strömungsoberfläche 100a an der Stelle der Oberflächenausblasöffnung 110 ergibt, vorzugsweise einen spitzen Winkel a10 ein. Die Tangente T100 ergibt sich insbesondere in einem in Bezug auf die Strömungskörper-Längsrichtung L100 mit der Oberflächenausblasöffnung 110 fluchtenden Abschnitt der Strömungsoberfläche 100a, wie dies schematisch in Fig. 1 gezeigt ist. Die Mittelachse M10 des Ausblaskanals 10 kann insbesondere als eine Achse definiert sein, welche durch die Flächenschwerpunkte der sich entlang der Längserstreckung des Ausblaskanals 10 ergebenden Querschnittsflächen des Ausblaskanals 10 verläuft.

Der Winkel a10 liegt bevorzugt zwischen 85 Grad und 5 Grad. Innerhalb diese Bereichs können die Oberflächenausblasöffnungen 110 mit geringem Herstellungsaufwand in der Strömungsoberfläche 100a ausgebildet werden. Besonders bevorzugt liegt der Winkel zwischen 60 Grad und 15 Grad. In diesem Winkelbereich kann die Strömung des Umgebungsfluids in besonders effizienter Weise beeinflusst werden.

Wie in den Fig. 2 und 4 weiterhin gezeigt ist, weist der Fluidaktuator 1 einen Ansaugkanal 20 mit einer an dessen ersten Ende 21 vorgesehenen Ansaugöffnung 21A auf. Die Ansaugöffnung ist in dem in den Figuren gezeigten, in den Strömungskörper 100 integrierten Zustand des Fluidaktuators 1 an die Oberflächenansaugöffnung 120 angeschlossen. An dessen zweiten Ende 22 mündet der Ansaugkanal 20 an einer zwischen dem ersten Ende 11 des Ausblaskanals 10 und dem zweiten Ende 12 des Ausblaskanals 10 vorgesehenen Entrainmentöffnung 22A in den Ausblaskanal 10 ein. Der Ansaugkanal 20 verbindet damit die Strömungsoberfläche 100a und den Ausblaskanal 10 in fluidkommunizierender Weise. Insbesondere bildet der Ansaugkanal 20 eine Rückführungsleitung zum Rückführen von Umgebungsfluid von der Strömungsoberfläche 100a in den Ausblaskanal 10.

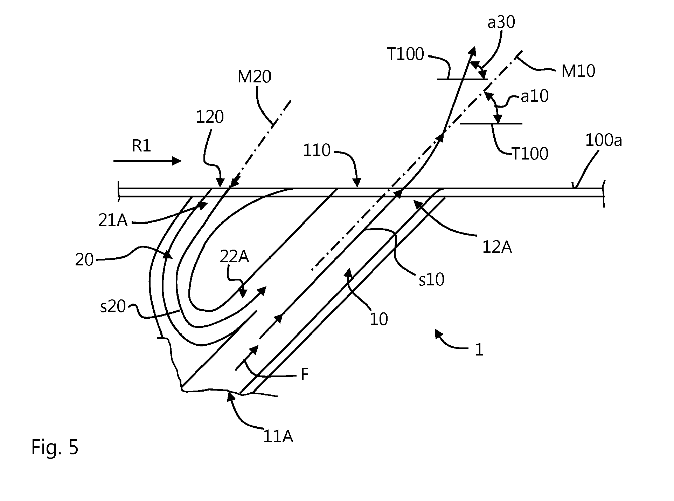

Durch das Einmünden des Ansaugkanals 20 in den Ausblaskanal 10 an der Entrainmentöffnung 10 bewirkt ein in einer Druckfluidströmungsrichtung F von dem ersten Ende 11 des Ausblaskanals 10 zu dem zweiten Ende 12 des Ausblaskanals 10 strömender Massenstrom eines Druckfluids eine Einsaugung von sich in dem Ansaugkanal 20 befindlichem Fluid in den Ausblaskanal 10. Dieses sogenannte Entrainment von sich in dem Ansaugkanal 20 befindlichem Fluid führt zu einem Massenstrom von Fluid durch den Ansaugkanal 20 von der Oberflächenansaugöffnung 120, an welche die Ansaugöffnung 21A des Ansaugkanals 20 angeschlossen ist, zu der Entrainmentöffnung 22A. In den Fig. 3 und 5 ist diese schematisch durch die Stromlinie s20 dargestellt. Infolge des Massentransports 20 wird in einem Bereich um die Oberflächenansaugöffnung 120 lokal der Druck verringert. Dies führt zu einer Ablenkung des aus der Oberflächenausblasöffnung 110 austretenden Strahls des durch den Ausblaskanal 10 strömenden Druckfluids. In den Fig. 3 und 5 ist dies durch die Stromlinie s10 schematisch dargestellt. Durch das Ansaugen von Fluid in den Ansaugkanal 20 wird der Strahl des aus der Oberflächenausblasöffnung 110 ausgeblasenen Druckfluids in Richtung der Oberflächenansaugöffnung 120 abgelenkt. Damit wird ein Austrittswinkel a30 des Strahls, welcher sich zwischen der Tangente T100 an die Strömungsoberfläche 100a und dem Strahl des aus der Oberflächenausblasöffnung 110 ausgeblasenen Druckfluids ergibt, von dem sich aus dem Verlauf des Ausblaskanals ergebenden geometrischen Winkel a10 zwischen der Mittelachse M10 des Ausblaskanals 10 und der Tangente T100 entkoppelt. Bei der in Fig. 3 gezeigten Konfiguration des Strömungskörpers 100, bei welcher die Oberflächenansaugöffnung 120 in Bezug auf die Strömungsrichtung R1 stromabwärts der Oberflächenausblasöffnung 110 gelegen ist, wird der Austrittswinkel a30 des Strahls gegenüber dem geometrischen Winkel a10 verkleinert. Bei der in Fig. 5 gezeigten Konfiguration des Strömungskörpers 100, bei welcher die Oberflächenansaugöffnung 120 in Bezug auf die Strömungsrichtung R1 stromaufwärts der Oberflächenausblasöffnung 110 gelegen ist, wird der Austrittswinkel a30 des Strahls gegenüber dem geometrischen Winkel a10 vergrößert.

Wie in den Fig. 2 und 4 gezeigt ist, schließt eine Mittelachse M20 des Ansaugkanals 20, welche sich im Bereich der Ansaugöffnung 21A ergibt, im Bereich des Anschlusses des Ansaugkanals 20 an die Oberflächenansaugöffnung 120 mit der Tangente T100 einen spitzen Winkel a20 ein. Dieser geometrische Winkel a20 liegt bevorzugt in einem Bereich zwischen 5 Grad und 85 Grad.

Wie insbesondere in den Fig. 2 und 4 zu erkennen ist, sind die Oberflächenausblasöffnung 110 und die Oberflächenansaugöffnung 120 in der Strömungskörper-Längsrichtung L100 in einem Abstand d zueinander angeordnet.

In den Fig. 2 und 4 ist ein bevorzugter Verlauf des Ansaugkanals 20 im Bereich dessen zweiten Endes 22 dargestellt. Hierbei verläuft der Ansaugkanal 20 im Bereich des zweiten Endes 22 derart, dass die Entrainmentöffnung 22A der Ausblasöffnung 12A zugewandt orientiert ist. Insbesondere schließt die Mittelachse M22 des Ansaugkanals 20, welche sich im Bereich der Entrainmentöffnung 22A ergibt, mit der Mittelachse M11 des Ausblaskanals 10, welche sich im Bereich der Entrainmentöffnung 22A ergibt, einen Winkel a11 kleiner oder gleich 90 Grad ein, wie beispielhaft in Fig. 2 gezeigt, oder verläuft parallel zu dieser, wie beispielhaft in Fig. 4 gezeigt.

Wie insbesondere in den Fig. 2 und 4 dargestellt ist, kann der Ausblaskanal 10 zwischen der Entrainmentöffnung 22A und der Ausblasöffnung 12A einen Querschnitt c12 aufweisen, der größer ist als ein Querschnitt c11 des Ausblaskanals 10 zwischen der Einlassöffnung 11A und der Entrainmentöffnung 22A. In den Fig. 2 und 4 ist sind die Querschnitte c11 und c12 jeweils als Durchmesser des Ausblaskanals eingezeichnet. Unter dem Querschnitt des Kanals ist hierbei eine durch die Wandungen des Kanals definierte Querschnittsfläche des Kanals zu verstehen. Wie die Fig. 2 und 4 weiterhin zeigen, weist die Entrainmentöffnung 22A eine Querschnittsfläche c22 auf, welche bevorzugt kleiner ist als der Querschnitt c11 des Ausblaskanals 10 zwischen der Einlassöffnung 11A und der Entrainmentöffnung 22A.

Durch Abstimmung der Parameter der Gruppe bestehend aus dem Winkel a10, dem Winkel a20, dem Querschnitt c11, dem Querschnitt c12, dem Querschnitt c22 und dem Abstand d kann der Austrittswinkel a30 des Strahls des aus der Ausblasöffnung 10 ausgeblasenen Druckfluids auf effiziente Weise eingestellt werden.

Weiterhin kann ein zwischen dem Ausblaskanal 10 und dem Ansaugkanal 20 angeordneter Zentralkörper 30 vorgesehen sein, wie dies insbesondere in den Fig. 2 und 4 dargestellt ist. Der Zentralkörper 30 bildet mit einer ersten Oberfläche 30a im Bereich zwischen der Entrainmentöffnung 22A und der Ausblasöffnung 12A eine Wandung des Ausblaskanals 10. Insbesondere bildet die erste Oberfläche 30a des Zentralkörpers 30 einen Teil der den Querschnitt c12 des Ausblaskanals 10 zwischen der Entrainmentöffnung 22A und der Ausblasöffnung 12) definierenden Wandung. Mit einer zweiten Oberfläche 30b bildet der Zentralkörper 30 eine Wandung des Ansaugkanals 20, insbesondere einen Teil einer den Querschnitt des Ansaugkanals 20 definierenden Wandung. Die erste Oberfläche 30a des Zentralkörpers 30 erstreckt sich bevorzugt eben, wie insbesondere in Fig. 3 erkennbar ist, insbesondere weist diese bevorzugt lediglich eine Krümmung in einer einzigen Krümmungsrichtung auf. Die zweite Oberfläche 30b kann insbesondere einen gekrümmten Verlauf aufweisen, wie dies in Fig. 3 gezeigt ist, und dadurch auf einfache Weise einen in Bezug auf Strömungsverluste günstigen Verlauf des Ansaugkanals 20 definieren.

Der Zentralkörper 30 kann insbesondere als ein Hohlkörper ausgeführt sein, wodurch dessen Gewicht verringert wird. Insbesondere kann der Zentralkörper 30 einstückig mit den Ansaugkanal 20 bildenden Strukturen bzw. Wandungen und/oder mit den Ausblaskanal 10 bildenden Strukturen bzw. Wandungen ausgebildet sein oder mit diesen verbunden sein. Auch kann der Zentralkörper 30 einstückig mit den die Strömungsoberfläche 100a bildenden Strukturen bzw. Wandungen ausgebildet sein oder mit diesen verbunden sein.

Mittels der in Fig. 1 schematisch dargestellten, optionalen Zufuhrvariationseinrichtung 50 ist eine Zufuhr, insbesondere ein Massenstrom, des durch die Druckfluidquelle 240 bereitgestellten Druckfluids in den Ausblaskanal 10 regelbar. Eine vorteilhafte Gestaltung der Regelbarkeit sieht eine periodisch Unterbrechung des Massenstroms des Druckfluids vor. Die Einlassöffnung 11A des Ausblaskanals 10 ist hierbei an einen Ausgang 51 der Variationseinrichtung 50 angeschlossen und ein Eingang 52 der Variationseinrichtung 50 ist an die Druckfluidquelle 240 anschließbar.

In Fig. 1 ist der Strömungskörper 100 beispielhaft als ein Teil einer Tragfläche 200 dargestellt, wobei die Einlassöffnung 11A mit einer Druckfluidquelle 240 verbunden ist. Insbesondere ist die Einlassöffnung 11A an den Ausgang 51 der Variationseinrichtung 50 angeschlossen und der Eingang 52 der Variationseinrichtung 50 ist an die Druckfluidquelle 240 angeschlossen. Damit kann ein Druckfluidmassenstrom in den Ausblaskanal 10 eingeleitet werden.

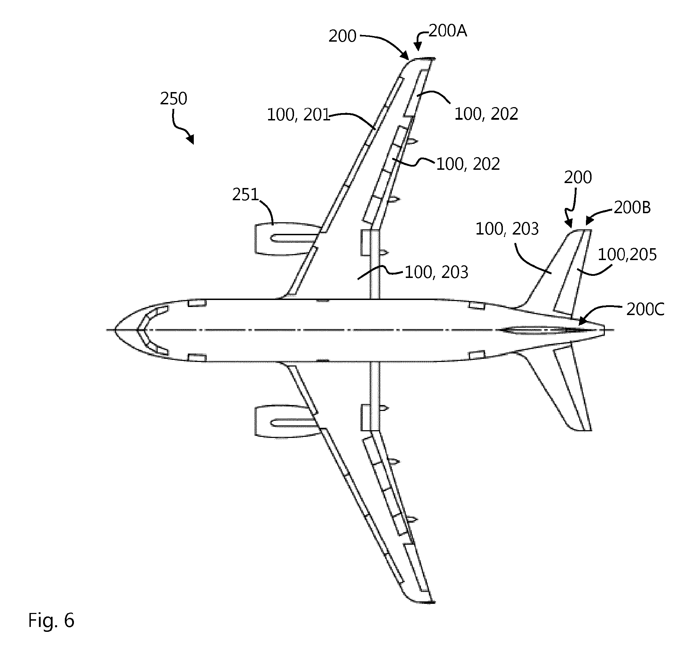

Fig. 6 zeigt beispielhaft eine Tragfläche 200 für ein Luftfahrzeug 250 mit zumindest einem Strömungskörper 100, wobei die Einlassöffnung 11A mit einer Druckfluidquelle 240 verbunden ist. Die Druckfluidquelle 240 kann hierbei insbesondere durch einen Zapfluftausgang (nicht gezeigt) eines Triebwerks 251 des Luftfahrzeugs 250 gebildet sein.

Wie Fig. 6 weiterhin zeigt, kann die Tragfläche 200 durch einen Flügel 200A, ein Höhenruder 200B oder ein Seitenruder 200C gebildet sein. Der Strömungskörper 100 kann hierbei beispielsweise eine Vorderkantenklappe 201, eine Hinterkantenklappe 202 oder einen Flügelhauptkörper 203 bilden.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Fluidaktuator
- 10: Ausblaskanal
- 11: erstes Ende des Ausblaskanals
- 11A: Einlassöffnung
- 12: zweites Ende des Ausblaskanals
- 12A: Ausblasöffnung
- 20: Ansaugkanal
- 21: erstes Ende des Ansaugkanals
- 21A: Ansaugöffnung
- 22: zweites Ende des Ansaugkanals
- 22A: Entrainmentöffnung
- 30: Zentralkörper
- 30a: erste Oberfläche des Zentralkörpers
- 30b: zweite Oberfläche des Zentralkörpers
- 40: Ansaugvorrichtung
- 50: Zufuhrvariationseinrichtung
- 51: Ausgang der Variationseinrichtung
- 52: ein Eingang der Variationseinrichtung
- 100: Strömungskörper
- 100a: Strömungsoberfläche
- 100s: saugseitiger Oberflächenbereich der Strömungsoberfläche
- 100p: druckseitiger Oberflächenbereich der Strömungsoberfläche
- 110: Oberflächenausblasöffnung
- 120: Oberflächenansaugöffnung
- 200: Tragfläche
- 200A: Flügel
- 200B: Höhenruder
- 200C: Seitenruder
- 201: Vorderkantenklappe
- 202: Hinterkantenklappe
- 203: Flügelhauptkörper
- 204: Höhenflosse
- 205: Höhenruder
- 240: Druckfluidquelle
- 250: Luftfahrzeug
- 251: Triebwerk
- a10: Winkel
- a20: Winkel
- a30: Winkel
- c11: Querschnitt des Ausblaskanals
- c12: Querschnitt des Ausblaskanals
- M10: Mittelachse des Ausblaskanals im Bereich der Ausblasöffnung
- M11: Mittelachse des Ausblaskanals im Bereich der Entrainmentöffnung
- M20: Mittelachse des Ansaugkanals im Bereich der Entrainmentöffnung
- L100: Strömungskörper-Längsrichtung
- d: Abstand zwischen der Oberflächenausblasöffnung und der Oberflächenansaugöffnung
- D100: Strömungskörper-Tiefenrichtung
- F: Druckfluidströmungsrichtung
- s20: Stromlinie
- s10: Stromlinie
- S100: Saugseite
- P100: Druckseite
- R1: Strömungsrichtung des Umgebungsfluids
- T100: Tangente
- Z: Detail

## Patentansprüche

1. Fluidaktuator (1) zur Beeinflussung einer Strömung eines Umgebungsfluids entlang einer Strömungsoberfläche (100a), mit:
einem Ausblaskanal (10) mit einer an dessen ersten Ende (11) vorgesehenen Einlassöffnung (11A) zur Verbindung mit einer Druckfluidquelle (240) und einer an dessen zweiten Ende (12) vorgesehenen Ausblasöffnung (12A) zum Anschluss an eine in der Strömungsoberfläche (100a) ausgebildete Oberflächenausblasöffnung (110); und
einem Ansaugkanal (20) mit einer an dessen ersten Ende (21) vorgesehenen Ansaugöffnung (21A) zum Anschluss an eine in der Strömungsoberfläche (100a) ausgebildete Oberflächenansaugöffnung (120), welche in einer Strömungsrichtung (R1) des Umgebungsfluids beabstandet zu der Oberflächenausblasöffnung (110) angeordnet ist, wobei der Ansaugkanal (20) an dessen zweiten Ende (22) an einer zwischen dem ersten Ende (11) des Ausblaskanals (10) und dem zweiten Ende (12) des Ausblaskanals (10) vorgesehenen Entrainmentöffnung (22A) in den Ausblaskanal (10) einmündet.

2. Fluidaktuator (1) nach Anspruch 1, wobei die Entrainmentöffnung (22A) der Ausblasöffnung (12A) zugewandt orientiert ist.

3. Fluidaktuator (1) nach Anspruch 1 oder 2, wobei der Ausblaskanal (10) zwischen der Entrainmentöffnung (22A) und der Ausblasöffnung (12A) einen Querschnitt (c12) aufweist, der größer ist als ein Querschnitt (c11) des Ausblaskanals (10) zwischen der Einlassöffnung (11A) und der Entrainmentöffnung (22A).

4. Fluidaktuator (1) nach einem der voranstehenden Ansprüche, wobei ein Zentralkörper (30) jeweils eine sich zwischen der Entrainmentöffnung (22A) und der Ausblasöffnung (12A) des Ausblaskanals (10) erstreckende Wandung des Ausblaskanals (10) sowie eine Wandung des Ansaugkanals (20) ausbildet.

5. Fluidaktuator (1) nach einem der voranstehenden Ansprüche, zusätzlich aufweisend:
eine Zufuhrvariationseinrichtung (50), mittels derer eine Zufuhr eines durch die Druckfluidquelle (240) bereitgestellten Druckfluids in den Ausblaskanal (10) regelbar, insbesondere periodisch unterbrechbar, ist, wobei die Einlassöffnung (11A) des Ausblaskanals (10) an einen Ausgang (51) der Variationseinrichtung (50) angeschlossen und ein Eingang (52) der Variationseinrichtung (50) an die Druckfluidquelle (240) anschließbar ist.

6. Strömungskörper (100) mit einer Strömungsoberfläche (100a) zur Überströmung mit einem Umgebungsfluid in einer Strömungsrichtung (R1), aufweisend einen Fluidaktuator (1) mit:
einem Ausblaskanal (10) mit einer an dessen ersten Ende (11) vorgesehenen Einlassöffnung (11A) zur Verbindung mit einer Druckfluidquelle (240) und einer an dessen zweiten Ende (12) vorgesehenen Ausblasöffnung (12A), welche an eine in der Strömungsoberfläche (100a) ausgebildete Oberflächenausblasöffnung (110) angeschlossen ist; und
einem Ansaugkanal (20) mit einer an dessen ersten Ende (21) vorgesehenen Ansaugöffnung (21A), welche an eine in der Strömungsoberfläche (100a) ausgebildete, in einer Strömungsrichtung (R1) des Umgebungsfluids beabstandet zu der Oberflächenausblasöffnung (110) angeordnete Oberflächenansaugöffnung (120) angeschlossen ist, wobei der Ansaugkanal (20) an dessen zweiten Ende (22) an einer zwischen dem ersten Ende (11) des Ausblaskanals (10) und dem zweiten Ende (12) des Ausblaskanals (10) vorgesehenen Entrainmentöffnung (22A) in den Ausblaskanal (10) einmündet.

7. Strömungskörper (100) nach Anspruch 6, wobei die Oberflächenansaugöffnung (120) in Bezug auf die Strömungsrichtung (R1) stromabwärts der Oberflächenausblasöffnung (110) angeordnet ist.

8. Strömungskörper (100) nach Anspruch 6, wobei die Oberflächenansaugöffnung (120) in Bezug auf die Strömungsrichtung (R1) stromaufwärts der Oberflächenausblasöffnung (110) angeordnet ist.

9. Strömungskörper (100) nach einem der Ansprüche 6 bis 8, wobei eine Mittelachse (M10) des Ausblaskanals (10), welche sich im Bereich der Ausblasöffnung (12A) des Ausblaskanals (10) ergibt, mit einer Tangente (T100), welche sich an der Strömungsoberfläche (100a) an der Stelle der Oberflächenausblasöffnung (110) ergibt, einen spitzen Winkel (a10), insbesondere zwischen 85 Grad und 5 Grad und bevorzugt zwischen 60 Grad und 15 Grad, einschließt.

10. Tragfläche (200) für ein Luftfahrzeug (250) mit zumindest einem Strömungskörper (100) nach einem der Ansprüche 6 bis 9, wobei die Einlassöffnung (11A) des Ausblaskanals (10) des Fluidaktuators (1) mit einer Druckfluidquelle (240) verbunden ist.

11. Tragfläche (200) nach Anspruch 10, wobei zumindest ein Strömungskörper (100) eine der Tragflächenkomponenten der Gruppe bestehend aus Vorderkantenklappe (201), Hinterkantenklappe (202), Flügelhauptkörper (203), Höhenflosse (204) und Höhenruder (205) bildet.
